# EUROPÄISCHE PATENTSCHRIFT

(11) **EP 2 127 399 B1**
(45) Veröffentlichungstag und Bekanntmachung des Hinweises auf die Patenterteilung: **05.11.2014**
(21) Anmeldenummer: 07712100.2
(22) Anmeldetag: 25.01.2007
(51) Int. Cl.: H04N 9/31, H05B 41/282

(54) **SCHALTUNGSANORDNUNG UND VERFAHREN ZUM BETREIBEN EINER HOCHDRUCKENTLADUNGSLAMPE**
CIRCUIT ARRANGEMENT AND METHOD FOR OPERATING A HIGH-PRESSURE DISCHARGE LAMP
ARRANGEMENT DE CIRCUIT ET PROCÉDÉ DE FONCTIONNEMENT D'UNE LAMPE À DÉCHARGE À HAUTE PRESSION

(43) Veröffentlichungstag der Anmeldung: 02.12.2009
(73) Patentinhaber: OSRAM GmbH, 80807 München (DE)
(72) Erfinder: BREUER, Christian, 44267 Dortmund (DE); WOLTER, Kai, 14197 Berlin (DE)
(86) Internationale Anmeldenummer: PCT/EP2007/050713
(87) Internationale Veröffentlichungsnummer: WO 2008/089846

(56) Entgegenhaltungen:
- EP-A- 1 569 466
- EP-A1- 0 749 248
- WO-A-2005/120138
- WO-A-2006/056926
- US-A- 5 706 061
- US-A- 5 754 249
- US-A1- 2005 128 775
- US-B1- 6 392 717

## Beschreibung

### Technisches Gebiet

Die vorliegende Erfindung betrifft eine Schaltungsanordnung zum Betreiben einer Hochdruckentladungslampe mit einer Kommutierungseinrichtung, die einen Eingang aufweist zum Koppeln mit einer Gleichspannungsquelle und einen Ausgang zum Koppeln mit der Hochdruckentladungslampe, wobei die Kommutierungseinrichtung ausgelegt, die am Eingang anliegende Spannung mit ihrem Ausgang zu koppeln, einer Steuervorrichtung, die ausgelegt ist, die Polarität mit der die am Eingang der Kommutierungseinrichtung anliegende Spannung mit dem Ausgang der Kommutierungseinrichtung gekoppelt ist, zu kommutieren, und einer Sync-Vorrichtung, die ausgelegt ist, an ihrem Ausgang ein Synchronisationssignal bereitzustellen. Sie betrifft überdies eine Projektionseinrichtung mit einer derartigen Schaltungsanordnung, ein entsprechendes Verfahren zum Betreiben einer Hochdruckentladungslampe an einer derartigen Schaltungsanordnung und schließlich ein Computerprogrammprodukt zur Durchführung der Schritte des erwähnten Verfahrens.

### Stand der Technik

Gattungsgemäße Schaltungsanordnungen werden beispielsweise für Projektionseinrichtungen verwendet, die überdies ein Farbrad aufweisen, das mit einer bestimmten Frequenz rotiert. Diese Frequenz ist üblicherweise an die Videofrequenz gekoppelt, die in Europa 48 Bilder/s und in den Vereinigten Staaten 63 Bilder/s beträgt. Üblicherweise wird das Farbrad mit der zwei- bis vierfachen Videofrequenz rotiert, gemäß den genannten Beispielen entsprechend mit ca. 96 bis 252 Umdrehungen/s.

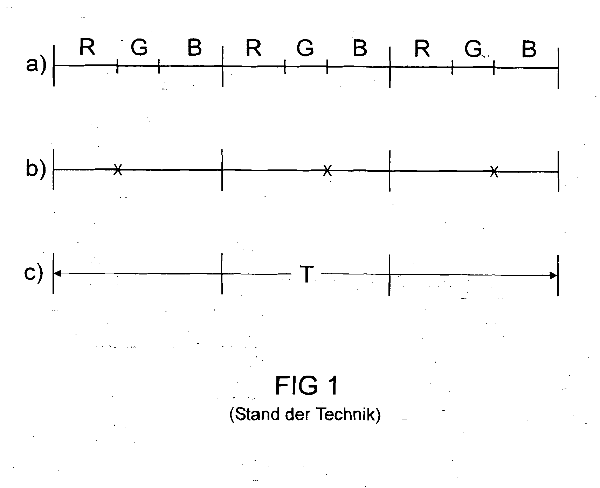

Diese Vorgehensweise ist in der Fig. 1 dargestellt. Dabei zeigt Fig. 1c die Periodendauer T an. Gemäß Kurvenzug 1a umfasst eine Periodendauer T vorliegend drei Umdrehungen des Farbrads, wobei sich vorliegend die Farbfolgen R für Rot, G für Grün und B für Blau dreimal wiederholen. Als Kommutierungszeitpunkte kommen Farbsegmentwechsel in Betracht. Dabei wird das so genannte Lichtventil kurzzeitig ausgeschaltet, damit bei der Projektion keine zwei Mischfarben entstehen. Diese Abschaltzeit wird für die Kommutierung genutzt. Kurvenzug 1b zeigt die tatsächlich gewählten Kommutierungszeitpunkte an. Kommutiert wird der Lampenstrom. Dabei sind für eine volle Stromperiode zwei Kommutierungen nötig.

Die in Fig. 1b gezeigt Abfolge von Kommutierungszeitpunkten wiederholt sich periodisch. Dabei stellt sich im Mittel eine Kommutierungsfrequenz ein von 3 x der Videobildsequenz, im Ausführungsbeispiel bei europäischer Video-bildsequenz demnach 3 x 48 Hz = 144 Hz. Wenn nun für einevolle Stromperiode zwei Kommutierungen nötig sind, ergibt sich demnach eine Lampenbetriebsfrequenz von 144 Hz / 2 = 72 Hz. Bezogen auf die Videofrequenz ergibt sich daher ein.Proportionalitätsfaktor von 72 Hz / 48 Hz = 1,5.

Bei einer Erhöhung auf vier Farbradumdrehungen pro Periodendauer T ergibt sich demnach ein Proportionalitätsfaktor von 2. Über diesen Proportionalitätsfaktor ist demnach die Lampenbetriebsfrequenz an die Videofrequenz gekoppelt. Dabei weist jedoch jede Lampe eine ihr eigene optimale Lampenbetriebsfrequenz auf. Diese ermöglicht einen Betrieb ohne Flickern, den Aufbau eines stabilen Bogens und eine hohe Stabilität der Elektroden über ihre Lebensdauer.

Daraus ergeben sich zwei Probleme: Selbst wenn eine Projektionseinrichtung, in der eine derartige Schaltungsanordnung eingesetzt ist, für europäische Verhältnisse optimal ausgelegt ist, d. h. die Lampe mit ihrer optimalen Lampenbetriebsfrequenz betrieben wird, so ist ein derartiges System für einen Betrieb in den Vereinigten Staaten ungünstig ausgelegt. Zum anderen lassen sich nur feste Proportionalitätsfaktoren einstellen. Wenn sich nunmehr eine optimale Lampenbetriebsfrequenz bei einem Proportionalitätsfaktor von 1,5 ergeben würde, so lässt sich dieser mit den Mitteln des Stands der Technik nicht realisieren.

### Darstellung der Erfindung

Die Aufgabe der vorliegenden Erfindung besteht deshalb darin, eine gattungsgemäße Schaltungsanordnung derart weiterzubilden, dass unabhängig von der Videobildfrequenz ein Betrieb der Hochdruckentladungslampe mit einer optimalen Lampenbetriebsfrequenz ermöglicht wird. Sie besteht weiterhin, darin, eine entsprechende Projektionseinrichtung, ein entsprechendes Verfahren zum Betreiben einer Hochdruckentladungslampe und ein Computerprogrammprodukt zur Durchführung der Schritte des erwähnten Verfahrens bereitzustellen.

Diese Aufgaben werden gelöst durch eine Schaltungsanordnung mit den Merkmalen von Patentanspruch 1, eine Projektionseinrichtung mit den Merkmalen von Patentanspruch 10, ein Verfahren mit den Merkmalen von Patentanspruch 12 sowie ein Computerprogrammprodukt mit den Merkmalen von Patentanspruch 13.

Die vorliegende Erfindung basiert grundsätzlich auf der Erkenntnis, dass die obige Aufgabe gelöst werden kann, wenn eine gattungsgemäße Schaltungsanordnung erweitert wird um eine Timervorrichtung und eine Patternvorrichtung. Dabei ist die Timervorrichtung ausgelegt, an ihrem Ausgang ein Kommutierungsauslösesignal-zu erzeugen, das mit einer vorgebbaren Betriebsfrequenz, bevorzugt mit der optimalen Lampenbetriebsfrequenz, der Hochdruckentladungslampe synchronisiert ist. In der Patternvorrichtung ist eine Auswahl von möglichen Kommutierungszeitpunkten abgelegt, wobei die Auswahl der möglichen Kommutierungszeitpunkte zeitlich synchronisiert ist auf das Synchronisierungssignal. Die Patternvorrichtung weist einen Eingang auf, der mit dem Ausgang der Timervorrichtung zur Übermittlung des Kommutierungsauslösesignals gekoppelt ist. Dabei ist die Patternvorrichtung ausgelegt, auf den Empfang eines Kommutierungsauslösesignals beim zeitlich nächsten Kommutierungszeitpunkt der Auswahl an Kommutierungszeitpunkten ein Kommutierungssteuersignal an die Steuervorrichtung zur Bewirkung einer Kommutierung zu koppeln.

Dabei ist das Synchronisationssignal bevorzugt synchronisiert auf die Frames eines Videosignals und damit unabhängig von der vorgebbaren Betriebsfrequenz der Hochdruckentladungslampe. Demnach liegen zwar in der Patternvorrichtung die möglichen Kommutierungszeitpunkte synchronisiert auf das Videosignal vor, diese Kommutierungszeitpunkte werden jedoch nicht periodisch wiederholt. Vielmehr spiegelt sich in der Timervorrichtung die optimale Lampenbetriebsfrequenz wider, die nun dazu verwendet wird, geeignete Kommutierungszeitpunkte aus der Auswahl von Kommutierungszeitpunkten, so wie sie in der Patternvorrichtung abgelegt sind, auszuwählen. Dadurch können die gewählten Kommutierungszeitpunkte, bezogen auf eine Periode des Videosignals, von Periode zu Periode variiert werden. Damit lassen sich einerseits sehr viel feinere Proportionalitätsfaktoren einstellen als im Stand der Technik und damit ein Betrieb der Hochdruckentladungslampe mit der optimalen Lampenbetriebsfrequenz unabhängig von der Videofrequenz des entsprechenden Landes. Dies resultiert je nach dem Kriterium, nach dem die optimale Lampenbetriebsfrequenz ausgewählt wurde, in einer höheren Lichtausbeute, einem höheren Wirkungsgrad, einem flickerfreieren Betrieb, einer maximalen Lampenlebensdauer und dergleichen.

Wie bereits erwähnt, weist die Sync-Vorrichtung bevorzugt einen Eingang auf, an dem ein in Frames gegliedertes Videosignal ankoppelbar ist, wobei die Sync-Vorrichtung ausgelegt ist, das Synchronisationssignal synchronisiert auf die Frames des Videosignals bereitzustellen. Dadurch ergibt sich der Vorteil, dass das System universell einsetzbar ist. Es leitet nämlich die Frequenz des Synchronisationssignals aus der Frequenz des Videosignals unmittelbar ab. Dennoch ist die Timervorrichtung nach wie vor mit einer optimalen Betriebsfrequenz der Hochdruckentladungslampe synchronisiert. Daraus folgt, dass die Lampe nach wie vor mit der optimalen Betriebsfrequenz betrieben wird, unabhängig von der Frequenz des Videosignals, das am Eingang der Sync-Vorrichtung angeschlossen ist.

Eine weitere bevorzugte Ausführungsform weist überdies eine Gleichanteilmessvorrichtung auf, die ausgelegt ist, den Istwert des Gleichanteils des am Ausgang der Kommutierungseinrichtung bereitgestellten Signals zu ermitteln und bereitzustellen.

Bevorzugt umfasst eine erfindungsgemäße Schaltungsanordnung weiterhin eine Sollwertvorgabevorrichtung, über die ein Sollwert des Gleichanteils des am Ausgang der Kommutierungseinrichtung bereitgestellten Signals festlegbar ist, und eine Regelvorrichtung, die einerseits mit der Patternvorrichtung gekoppelt ist, die andererseits zur Zuführung des Istwerts und des Sollwerts des Gleichanteils des am Ausgang der Kommutierungseinrichtung bereitgestellten Signals mit der Gleichanteilmessvorrichtung und der Sollwertvorgabevorrichtung gekoppelt ist, und die ausgelegt ist, die Ausgabe des Kommutierungssteuersignals so zu modifizieren, insbesondere durch Verzögern oder Eliminieren, dass der Betrag der Differenz zwischen Istwert und Sollwert des Gleichanteils des am Ausgang der Kommutierungseinrichtung bereitgestellten Signals unter einem vorgebbaren Schwellwert liegt. Diese Maßnahmen tragen dem folgenden Umstand Rechnung: Bei dem von der Anmelderin entwickelten, unter der Bezeichnung "Unishape" bekannten Verfahren werden die den einzelnen Farben zugeordneten Amplituden des Signals, mit dem die Hochdruckentladungslampe angesteuert wird, variiert. Dadurch lassen sich deutlich höhere Auflösungen sowie verbesserte Farbintensitäten erzielen. Werden nun die Kommutierungszeitpunkte von Periode zu Periode variiert, bestände die Gefahr, dass bei einer Ansteuerung entsprechend dem Unishape-Verfahren das die Lampe ansteuernde Signal insgesamt nicht gleichstromfrei sein könnte. Ein Gleichanteil könnte zu einem ungleichmäßigen Auswachsen von Elektrodenspitzen führen und damit die Probleme hervorrufen, die beispielsweise in der US 5,608,294, der WO 03/098979 A1 und der DE 198 29 600 A1 erläutert sind. Insofern ist bei einer Ausführungsform vorgesehen, dass der von der Sollwertvorgabevorrichtung bereitgestellte Sollwert gleich Null ist. Durch die erfindungsgemäße Maßnahme kann jedoch auch Systemen Rechnung getragen werden, in denen Elektroden systembedingt unterschiedlich stark belastet werden, beispielsweise durch eine Rückreflexion von Wärmestrahlung. In diesem Fall hat es sich als besonders vorteilhaft erwiesen, wenn der von der Sollwertvorgabevorrichtung bereitgestellte Sollwert ungleich Null ist, um dadurch sicherzustellen, dass die Elektroden gleich belastet werden.

Bei einer weiterhin bevorzugten Ausführungsform ist die Sollwertvorgabevorrichtung ausgelegt, den Sollwert dynamisch zu verändern, wobei die Sollwertvorgabevorrichtung insbesondere mit einer Temperaturmessvorrichtung und/oder mit einer Elektrodenspitzenmessvorrichtung gekoppelt ist. Diese eröffnet die Möglichkeit den Sollwert dynamisch im Hinblick auf Temperaturänderungen oder auf den Elektroden festgestelltes Spitzenwachstum zu variieren, um damit den Lampenbetrieb noch weiter zu optimieren.

Die vorgebbare Betriebsfrequenz ist bevorzugt eine lampenspezifische Betriebsfrequenz, insbesondere eine für die Lampe optimale Betriebsfrequenz. Die vorgebbare Betriebsfrequenz kann jedoch auch in Abhängigkeit mindestens eines Lampenparameters gewählt sein, beispielsweise optimiert im Hinblick auf die Lebensdauer, den Wirkungsgrad, die Flickeranfälligkeit, etc.

Bei einer bevorzugten Ausführungsform einer erfindungsgemäßen Projektionseinrichtung, die ein Farbrad und eine Ansteuerungsvorrichtung für das Farbrad umfasst, ist die Ansteuerungsvorrichtung für das Farbrad ausgelegt, das Farbrad derart zu rotieren, dass die Rotation mit dem Synchronisationssignal synchronisiert ist. Dadurch ist die Rotation des Farbrads, insofern das Synchronisationssignal aus dem Videosignal gewonnen wird, auf das Video-signal abgestimmt. Die Auswahl der Kommutierungszeitpunkte erfolgt davon unabhängig, wie im Zusammenhang mit den Ausführungsformen einer erfindungsgemäßen Schaltungsanordnung bereits beschrieben.

Weitere bevorzugte Ausführungsformen ergeben sich aus den Unteransprüchen. Die im Zusammenhang mit der erfindungsgemäßen Schaltungsanordnung vorgestellten bevorzugten Ausführungsformen und deren Vorteile gelten entsprechend, soweit anwendbar, für die erfindungsgemäße Projektionseinrichtung, das erfindungsgemäße Verfahren sowie das erfindungsgemäße Computerprogrammprodukt.

### Kurze Beschreibung der Zeichnung(en)

Im Nachfolgenden wird nunmehr ein Ausführungsbeispiel einer erfindungsgemäßen Schaltungsanordnung sowie einer erfindungsgemäßen Projektionseinrichtung unter Bezugnahme auf die beigefügten Zeichnungen näher beschrieben. Es zeigen:
- Fig. 1: die zeitliche Farbabfolge einer aus drei Umdrehungen des Farbrads bestehenden Periode bei einer Schaltungsanordnung nach dem Stand der Technik sowie die darin gewählten Kommutierungszeitpunkte;
- Fig. 2: in schematischer Darstellung den Aufbau einer erfindungsgemäßen Schaltungsanordnung;
- Fig. 3: den zeitlichen Ablauf verschiedener Signale bei einer erfindungsgemäßen Schaltungsanordnung; und
- Fig. 4: in schematischer Darstellung den Aufbau einer erfindungsgemäßen Projektionseinrichtung.

### Bevorzugte Ausführung der Erfindung

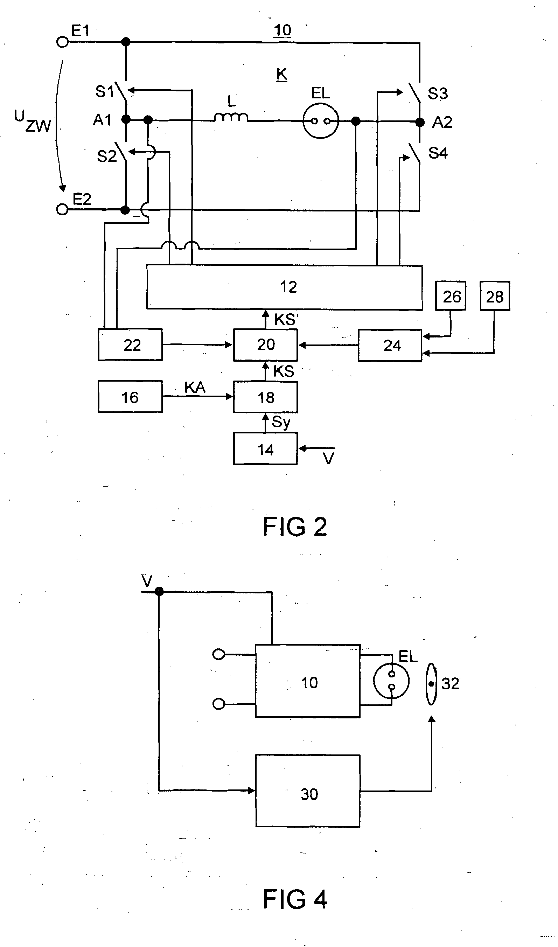

Fig. 2 zeigt in schematischer Darstellung den Aufbau einer erfindungsgemäßen Schaltungsanordnung 10. Sie umfasst eine Kommutierungseinrichtung K, die die Schalter S1, S2, S3, S4 umfasst, wobei diese vorliegend eine Vollbrückenanordnung bilden. Die Kommutierungseinrichtung K weist einen Eingang auf, der die beiden Eingangsanschlüsse E1 und E2 umfasst, sowie einen Ausgang, der die beiden Ausgangsanschlüsse A1 und A2 umfasst. Zwischen die beiden Ausgangsanschlüsse A1 und A2 ist die Serienschaltung einer Lampendrossel L und einer Hochdruckentladungslampe EL gekoppelt. Die vier Schalter S1 bis S4 werden von einer Steuervorrichtung 12 derart angesteuert, dass einerseits abwechselnd die Schalter S1 und S4 sowie andererseits die Schalter S2 und S3 le-itend geschaltet werden. Dadurch wird die Polarität, mit der die am Eingang der Kommutierungseinrichtung K anliegende Spannung U_{ZW} üblicherweise die so genannte Zwischenkreisspannung, mit dem Ausgang der Kommutierungseinrichtung K gekoppelt wird, kommutiert.

Sie umfasst weiterhin eine Sync-Vorrichtung 14, die an ihrem Ausgang ein Synchronisationssignal Sy bereitstellt. Vorliegend wird der Sync-Vorrichtung 14 an ihrem Eingang ein in Frames gegliedertes Videosignal V zugeführt, wobei die Sync-Vorrichtung 14 ausgelegt ist, das Synchronisationssignal Sy synchronisiert auf die Frames des Videosignals V bereitzustellen.

Die Schaltungsanordnung gemäß Fig. 2 umfasst weiterhin eine Timervorrichtung 16, die an ihrem Ausgang ein Kommutierungsauslösesignal KA bereitstellt, das mit einer vorgebbaren Betriebsfrequenz der Hochdruckentladungslampe EL synchronisiert ist. Diese vorgebbare Betriebsfrequenz kann eine lampenspezifische Betriebsfrequenz sein, sie kann auch in Abhängigkeit mindestens eines Lampenparameters gewählt sein, beispielsweise einer geringen Flickerneigung, einer möglichst langen Lebensdauer, eines hohen Wirkungsgrads oder dergleichen. Das Kommutierungsauslösesignal KA wird einer Patternvorrichtung 18 zugeführt, der überdies das Ausgangssignal Sy der Sync-Vorrichtung 14 zugeführt wird.

In der Patternvorrichtung 18 ist eine Auswahl von möglichen Kommutierungszeitpunkten abgelegt, wobei die Auswahl der möglichen Kommutierungszeitpunkte zeitlich synchronisiert ist auf das Synchronisierungssignal Sy. Die Patternvorrichtung 18 weist einen Eingang auf, der mit dem Ausgang der Timervorrichtung 16 zur Übermittlung des Kommutierungsauslösesignal KA gekoppelt ist. Die Patternvorrichtung 18 ist ausgelegt, auf den Empfang eines Kommutierungsauslösesignals KA beim zeitlich nächsten Kommutierungszeitpunkt der Auswahl an Kommutierungszeitpunkten ein Kommutierungssteuersignal KS auszugeben, um eine Kommutierung zu bewirken. Als Kommutierungszeitpunkte kommen nur eine bestimmte Auswahl an Farbübergängen in Betracht, da Kommutierungszeitpunkte bestimmten Kriterien genügen müssen. So werden im Hinblick auf einen optimalen Lampenbetrieb beispielsweise Farbübergänge ausgewählt, die sich durch eine hohe Amplitude auszeichnen. Im Hinblick auf ein optimales Projektionsergebnis, scheiden jedoch bestimmte Farbübergänge aus, da bei bestimmten Farbübergängen ein so genanntes Ringing, d. h. ein so genannter Einschwingvorgang, zu erkennen ist. Dies ist unerwünscht.

In dem Ausführungsbeispiel von Fig. 2 wird das Ausgangssignal KS der Patternvorrichtung 18 einer Regelvorrichtung 20 zugeführt. Diese erhält einerseits den Istwert des Gleichanteils des am Ausgang der Kommutierungseinrichtung K bereitgestellten Signals von einer Gleichanteilmessvorrichtung 22 sowie einen Sollwert für diesen Gleichanteil von einer Sollwertvorgabevorrichtung 24 zugeführt. Die Regelvorrichtung 20 ist ausgelegt, die Ausgabe des Kommutierungssteuersignals so zu modifizieren, insbesondere durch Verzögern oder Eliminieren, dass der Betrag der Differenz zwischen Istwert und Sollwert des Gleichanteils des am Ausgang der Kommutierungseinrichtung K bereitgestellten Signals unter einem vorgebbaren Schwellwert liegt. Das von der Regelvorrichtung 20 an die Steuervorrichtung 12 ausgegebene Signal ist mit KS' bezeichnet.

Die Sollwertvorgabevorrichtung 24 kann ausgelegt sein, einen konstanten Sollwert vorzugeben, der beispielsweise gleich Null oder um ungleichmäßiger Erwärmung der Elektrodenspitzen und dergleichen Rechnung zu tragen ungleich Null sein kann. Besonders bevorzugt ist die Sollwertvorgabevorrichtung 24 ausgelegt, den Sollwert dynamisch zu verändern. Vorliegend ist zu diesem Zweck die Sollwertvorgabevorrichtung 24 mit einer Temperaturmessvorrichtung 26 und mit einer Elektrodenspitzenmessvorrichtung 28 gekoppelt. Wird demnach festgestellt, dass die beiden Elektroden der Hochdruckentladungslampe EL auf unterschiedlicher Temperatur liegen, was zu einer ungleichmäßigen Abnutzung der Elektroden führen kann, oder wird festgestellt, dass die auf den Elektroden aufwachsenden Spitzen ungleichmäßig groß sind, so wird dies bei der Vorgabe des Sollwerts an die Regelvorrichtung 20 durch die Sollwertvorgabevorrichtung 24 berücksichtigt.

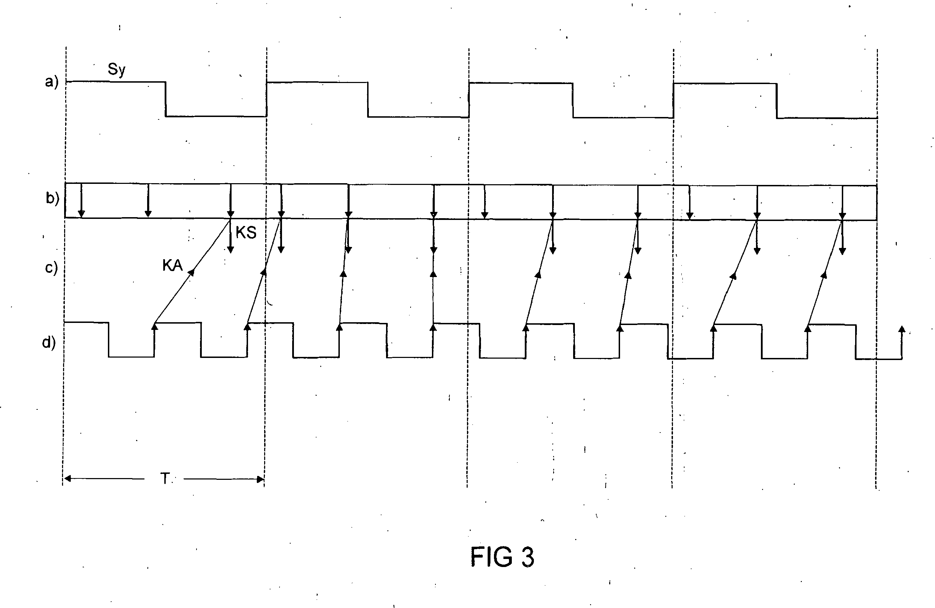

Fig. 3 zeigt in schematischer Darstellung den zeitlichen Ablauf diverser Signale bei dem Ausführungsbeispiel einer erfindungsgemäßen Schaltungsanordnung gemäß Fig. 2. Kurvenzug a) zeigt zunächst den zeitlichen Ablauf des von der Sync-Vorrichtung 14 bereitgestellten Synchronisierungssignals Sy. Dieses Synchronisierungssignal Sy ist synchronisiert mit dem Videosignal V. Kurvenzug b) zeigt die in der Patternvorrichtung 18 abgelegte Auswahl möglicher Kommutierungszeitpunkte. Diese sind - wie deutlich zu erkennen - synchronisiert mit dem Synchronisationssignal Sy. Zu erkennen ist eine Periodendauer T, die anzeigt, dass sich diese Auswahl zyklisch, in der Darstellung von Fig. 3 insgesamt viermal, wiederholt. Kurvenzug d) zeigt den zeitlichen Verlauf des von der Timervorrichtung 16 bereitgestellten Signals, das mit einer vorgebbaren Betriebsfrequenz der Hochdruckentladungslampe - und nicht mit dem Videosignal V - synchronisiert ist. Vorliegend wird bei jeder steigenden Flanke, siehe Kurvenzug c), ein Kommutierungsauslösesignal KA erzeugt und der Patternvorrichtung 18 zugeführt. Diese erzeugt daraufhin beim zeitlich nächsten Kommutierungszeitpunkt der Auswahl von Kommutierungszeitpunkten, siehe Kurvenzug b), ein Kommutierungssteuersignal KS und richtet dieses an die Steuervorrichtung 12, um eine Kommutierung zu bewirken. Durch diese Vorgehensweise wird die Hochdruckentladungslampe EL im Mittel mit der vorgebbaren Betriebsfrequenz der Hochdruckentladungslampe EL betrieben, und zwar unabhängig von der Frequenz des Videosignals V.

Fig. 4 zeigt in schematischer Darstellung den Aufbau einer erfindungsgemäßen Projektionseinrichtung. Diese umfasst eine erfindungsgemäße Schaltungsanordnung 10 sowie eine Ansteuerungsvorrichtung 30 für ein Farbrad 32. Sowohl der erfindungsgemäßen Schaltungsanordnung 10 als auch der Ansteuerungsvorrichtung 30 für das Farbrad 32 wird das Videosignal V zugeführt, um eine Ansteuerung derart zu bewirken, dass die Rotation des Farbrads 32 mit dem Videosignal V synchronisiert ist.

In einem bevorzugten Ausführungsbeispiel sind mehrere, noch bevorzugter alle, der folgenden in Fig. 2 dargestellten Bauelemente und Signale softwaremäßig realisiert und als Computerprogramm in einem Microcontroller ausführbar. Es sind dies die das Synchronisationssignal Sy bereitstellende Sync-Vorrichtung 14, die das Kommutierungsauslösesignal KA bereitstellende Timervorrichtung 16, die Patternvorrichtung 18, die das Kommutierungssteuersignal KS bereitstellt, die Gleichanteilmessvorrichtung 22, die Regelvorrichtung 20, die Sollwertvorgabevorrichtung 24 sowie die Steuervorrichtung 12.

## Patentansprüche

1. Schaltungsanordnung (10) zum Betreiben einer Hochdruckentladungslampe mit
- einer Kommutierungseinrichtung (K), die einen Eingang (E1, E2) aufweist zum Koppeln mit einer Gleichspannungsquelle und einen Ausgang (A1, A2) zum Koppeln mit der Hochdruckentladungslampe (EL), wobei die Kommutierungseinrichtung (K) ausgelegt ist, die am Eingang (E1, E2) anliegende Spannung (U_{ZW}) mit ihrem Ausgang (A1, A2) zu koppeln;
- einer Steuervorrichtung (12), die ausgelegt ist, die Polarität mit der,die am Eingang (E1, E2) der Kommutierungseinrichtung (K) anliegende Spannung (U_{ZW}) mit dem Ausgang (A1, A2) der Kommutierungseinrichtung (K) gekoppelt ist, zu kommutieren; und
- einer Sync-Vorrichtung (14), die ausgelegt ist, an ihrem Ausgang (A1, A2) ein Synchronisationssignal (Sy) bereitzustellen;
**dadurch gekennzeichnet,**
**dass** sie weiterhin umfasst:
- eine Timervorrichtung (16), die ausgelegt ist, an ihrem Ausgang (A1, A2) ein Kommutierungsauslösesignal (KA) zu erzeugen, das mit einer vorgebbaren Betriebsfrequenz der Hochdruckentladungslampe (EL) synchronisiert ist;
- eine Patternvorrichtung (18), in der eine Auswahl von möglichen Kommutierungszeitpunkten abgelegt ist, wobei die Auswahl der möglichen Kommutierungszeitpunkte zeitlich synchronisiert ist auf das Synchronisierungssignal (Sy), wobei die Patternvorrichtung (18) einen Eingang (E1, E2) aufweist, der mit dem Ausgang (A1, A2) der Timervorrichtung (16) zur Übermittlung des Kommutierungsauslösesignals (KA) gekoppelt ist, wobei die Patternvorrichtung (18) ausgelegt ist, auf den Empfang eines Kommutierungsauslösesignals (KA) beim zeitlich nächsten Kommutierungszeitpunkt der Auswahl an Kommutierungszeitpunkten ein Kommutierungssteuersignal (KS) an die Steuervorrichtung (12) zur Bewirkung einer Kommutierung zu koppeln.

2. Schaltungsanordnung (10) nach Anspruch 1,
**dadurch gekennzeichnet,**
**dass** die Sync-Vorrichtung (14) einen Eingang (E1, E2) aufweist, an dem ein in Frames gegliedertes Videosignal (V) ankoppelbar ist, wobei die Sync-Vorrichtung (14) ausgelegt ist, das Synchronisationssignal (Sy) synchronisiert auf die Frames des Videosignals bereitzustellen.

3. Schaltungsanordnung (10) nach einem der Ansprüche 1 oder 2,
**dadurch gekennzeichnet,**
**dass** sie weiterhin eine Gleichanteilmessvorrichtung (22) umfasst, die ausgelegt ist, den Istwert des Gleichanteils des am Ausgang (A1, A2) der Kommutierungseinrichtung (K) bereitgestellten Signals zu ermitteln und bereitzustellen.

4. Schaltungsanordnung (10) nach Anspruch 3,
**dadurch gekennzeichnet,**
**dass** sie eine Sollwertvorgabevorrichtung (24) umfasst, über die ein Sollwert des Gleichanteils des am Ausgang (A1, A2) der Kommutierungseinrichtung (K) bereitgestellten Signals festlegbar ist, und
eine Regelvorrichtung (20), die einerseits mit der Patternvorrichtung (18) gekoppelt ist, die andererseits zur Zuführung des Istwerts und des Sollwerts des Gleichanteils des am Ausgang (A1, A2) der Kommutierungseinrichtung (K) bereitgestellten Signals mit der Gleichanteilmessvorrichtung (22) und der Sollwertvorgabevorrichtung (24) gekoppelt ist, und die ausgelegt ist, die Ausgabe des Kommutierungssteuersignals (KS) so zu modifizieren, insbesondere durch Verzögern oder Eliminieren, dass der Betrag der Differenz zwischen Istwert und Sollwert des Gleichanteils des am Ausgang (A1, A2) der Kommutierungseinrichtung (K) bereitgestellten Signals unter einem vorgebbaren Schwellwert liegt.

5. Schaltungsanordnung (10) nach Anspruch 4,
**dadurch gekennzeichnet,**
**dass** der von der Sollwertvorgabevorrichtung (24) bereitgestellte Sollwert gleich Null ist.

6. Schaltungsanordnung (10) nach Anspruch 4,
**dadurch gekennzeichnet,**
**dass** der von der Sollwertvorgabevorrichtung (24) bereitgestellte Sollwert ungleich Null ist.

7. Schaltungsanordnung (10) nach einem der Ansprüche 4 bis 6,
**dadurch gekennzeichnet,**
**dass** die Sollwertvorgabevorrichtung (24) ausgelegt ist, den Sollwert dynamisch zu verändern, wobei die Sollwertvorgabevorrichtung (24) insbesondere mit einer Temperaturmessvorrichtung (26) und/oder mit einer Elektrodenspitzenmessvorrichtung (28) gekoppelt ist.

8. Schaltungsanordnung (10) nach einem der vorhergehenden Ansprüche,
**dadurch gekennzeichnet,**
**dass** die vorgebbare Betriebsfrequenz eine lampenspezifische Betriebsfrequenz ist.

9. Schaltungsanordnung (10) nach einem der Ansprüche 1 bis 7,
**dadurch gekennzeichnet,**
**dass** die vorgebbare Betriebsfrequenz in Abhängigkeit mindestens eines Lampenparameters gewählt ist.

10. Projektionseinrichtung mit einer Schaltungsanordnung (10) nach einem der vorhergehenden Ansprüche.

11. Projektionseinrichtung nach Anspruch 10,
**dadurch gekennzeichnet,**
**dass** sie ein Farbrad und eine Ansteuerungsvorrichtung (30) für das Farbrad umfasst, wobei die Ansteuerungsvorrichtung (30) für das Farbrad ausgelegt ist, das Farbrad derart zu rotieren, dass die Rotation mit dem Synchronisationssignal (Sy) synchronisiert ist.

12. Verfahren zum Betreiben einer Hochdruckentladungslampe (EL) an einer Schaltungsanordnung (10) mit einer Kommutierungseinrichtung (K), die einen Eingang (E1, E2) aufweist zum Koppeln mit einer Gleichspannungsquelle und einen Ausgang (A1, A2) zum Koppeln mit der Hochdruckentladungslampe (EL), wobei die Kommutierungseinrichtung (K) ausgelegt ist, die am Eingang (E1, E2) anliegende Spannung (U_{ZW}) mit ihrem Ausgang (A1, A2) zu koppeln; einer Steuervorrichtung (12), die ausgelegt ist, die Polarität mit der die am Eingang (E1, E2) der Kommutierungseinrichtung (K) anliegende Spannung (U_{ZW}) mit dem Ausgang (A1, A2) der Kommutierungseinrichtung (K) gekoppelt ist, zu kommutieren; einer Sync-Vorrichtung (14), die ausgelegt ist, an ihrem Ausgang (A1, A2) ein Synchronisationssignal (Sy) bereitzustellen; eine Timervorrichtung (16), die ausgelegt ist, an ihrem Ausgang (A1, A2) ein Kommutierungsauslösesignal (KA) zu erzeugen, das mit einer vorgebbaren Betriebsfrequenz der Hochdruckentladungslampe (EL) synchronisiert ist; eine Patternvorrichtung (18), in der eine Auswahl von möglichen Kommutierungszeitpunkten abgelegt ist, wobei die Auswahl der möglichen Kommutierungszeitpunkte zeitlich synchronisiert ist auf das Synchronisierungssignal (Sy), **gekennzeichnet durch** folgende Schritte:
a) Ausgeben eines Kommutierungsauslösesignals (KA) durch die Timervorrichtung (16);
b) Empfang des Kommutierungsauslösesignals (KA) **durch** die Patternvorrichtung (18);
c) beim zeitlich nächsten Kommutierungszeitpunkt der Auswahl an Kommutierungszeitpunkten Koppeln eines Kommutierungssteuersignals (KS) an die Steuervorrichtung (12); und
d) Ansteuern der Kommutierungseinrichtung (K) **durch** die Steuervorrichtung (12) zum Bewirken einer Kommutierung.

13. Computerprogrammprodukt, das in den internen Speicher eines digitalen Computers geladen werden kann und Softwarecodeabschnitte umfasst, mit denen die Schritte gemäß Anspruch 12 ausgeführt werden, wenn das Produkt auf einem Computer läuft.

## Claims

1. Circuit arrangement (10) for operation of a high-pressure discharge lamp having
- a commutation device (K), which has an input (E1, E2) for coupling to a DC voltage source and has an output (A1, A2) for coupling to the high-pressure discharge lamp (EL), with the commutation device (K) being designed to couple the voltage (U_{ZW}) which is applied to the input (E1, E2) to its output (A1, A2);
- a control apparatus (12), which is designed to commutate the polarity with which the voltage (U_{ZW}), which is applied to the input (E1, E2) of the commutation device (K), is coupled to the output (A1, A2) of the commutation device (K); and
- a synchronization apparatus (14), which is designed to provide a synchronization signal (Sy) at its output (A1, A2);
**characterized**
**in that** the circuit arrangement (10) furthermore comprises:
- a timer apparatus (16) which is designed to produce a commutation initiation signal (KA) at its output (A1, A2), which commutation initiation signal (KA) is synchronized with a predeterminable operating frequency of the high-pressure discharge lamp (EL);
- a pattern apparatus (18), in which a choice of possible commutation times is stored, with the choice of the possible commutation times being synchronized in time to the synchronization signal (Sy), with the pattern apparatus (18) having an input (E1, E2) which is coupled to the output (A1, A2) of the timer apparatus (16), for transmission of the commutation initiation signal (KA), with the pattern apparatus (18) being designed to couple a commutation control signal (KS) to the control apparatus (12), in order to produce commutation at the next commutation point in time from the choice of commutation times, on reception of a commutation initiation signal (KA).

2. Circuit arrangement (10) according to Claim 1,
**characterized**
**in that** the synchronization apparatus (14) has an input (E1, E2) to which a video signal (V), which is subdivided into frames, can be coupled, with the synchronization apparatus (14) being designed to provide the synchronization signal (Sy) synchronized to the frames of the video signal.

3. Circuit arrangement (10) according to one of Claims 1 and 2,
**characterized**
**in that** the circuit arrangement (10) furthermore comprises a DC component measurement apparatus (22), which is designed to determine and to provide the actual value of the DC component of the signal which is provided at the output (A1, A2) of the commutation device (K).

4. Circuit arrangement (10) according to Claim 3,
**characterized**
**in that** the circuit arrangement (10) comprises a nominal-value preset apparatus (24), via which a nominal value of the DC component of the signal which is provided at the output (A1, A2) of the commutation device (K) can be defined, and
a regulation apparatus (20), which on the one hand is coupled to the pattern apparatus (18) and on the other hand is coupled to the DC component measurement apparatus (22) and to the nominal-value preset apparatus (24) in order to supply the actual value and the nominal value of the DC component of the signal which is provided at the output (A1, A2) of the commutation device (K), which regulation apparatus (20) is designed to modify the output of the commutation control signal (KS), in particular by delaying it or eliminating it, such that the magnitude of the difference between the actual value and the nominal value of the DC component of the signal which is provided at the output (A1, A2) of the commutation device (K) is below a predeterminable threshold value.

5. Circuit arrangement (10) according to Claim 4,
**characterized**
**in that** the nominal value which is provided by the nominal-value preset apparatus (24) is equal to zero.

6. Circuit arrangement (10) according to Claim 4,
**characterized**
**in that** the nominal value which is provided by the nominal-value preset apparatus (24) is not equal to zero.

7. Circuit arrangement (10) according to one of Claims 4 to 6,
**characterized**
**in that** the nominal-value preset apparatus (24) is designed to dynamically vary the nominal value, with the nominal-value preset apparatus (24) in particular being coupled to a temperature measurement apparatus (26) and/or to an electrode-tip measurement apparatus (28).

8. Circuit arrangement (10) according to one of the preceding claims,
**characterized**
**in that** the predeterminable operating frequency is a lampspecific operating frequency.

9. Circuit arrangement (10) according to one of Claims 1 to 7,
**characterized**
**in that** the predeterminable operating frequency is chosen as a function of at least one lamp parameter.

10. Projection device having a circuit arrangement (10) according to one of the preceding claims.

11. Projection device according to Claim 10,
**characterized**
**in that** the projection device comprises a color wheel and a drive apparatus (30) for the color wheel, with the drive apparatus (30) for the color wheel being designed to rotate the color wheel such that the rotation is synchronized with the synchronization signal (Sy).

12. Method for operation of a high-pressure discharge lamp (EL) on a circuit arrangement (10) having a commutation device (K), which has an input (E1, E2) for coupling to a DC voltage source and has an output (A1, A2) for coupling to the high-pressure discharge lamp (EL), with the commutation device (K) being designed to couple the voltage (U_{ZW}) which is applied to the input (E1, E2) to its output (A1, A2); a control apparatus (12), which is designed to commutate the polarity with which the voltage (U_{ZW}), which is applied to the input (E1, E2) of the commutation device (K), is coupled to the output (A1, A2) of the commutation device (K); a synchronization apparatus (14), which is designed to provide a synchronization signal (Sy) at its output (A1, A2); a timer apparatus (16) which is designed to produce a commutation initiation signal (KA) at its output (A1, A2), which commutation initiation signal (KA) is synchronized with a predeterminable operating frequency of the high-pressure discharge lamp (EL); a pattern apparatus (18), in which a choice of possible commutation times is stored, with the choice of the possible commutation times being synchronized in time to the synchronization signal (Sy), **characterized by** the following steps:
a) output of a commutation initiation signal (KA) by the timer apparatus (16);
b) reception of the commutation initiation signal (KA) by the pattern apparatus (18);
c) coupling of a commutation control signal (KS) to the control apparatus (12) at the next commutation point in time from the choice of commutation times; and
d) driving of the commutation device (K) by the control apparatus (12) in order to produce commutation.

13. Computer program product which can be loaded in the internal memory of a digital computer and comprises software code sections by means of which the steps according to Claim 12 are carried out when the product runs on a computer.

## Revendications

1. Agencement de circuits (10) pour le fonctionnement d'une lampe à décharge à haute pression, comprenant :
- un dispositif de commutation (K) qui présente une entrée (E1, E2) servant au couplage à une source de tension continue et une sortie (A1, A2) servant au couplage à la lampe à décharge à haute pression (EL), où le dispositif de commutation (K) est conçu pour coupler la tension (U_{ZW}) s'appliquant à l'entrée (E1, E2), à la sortie (A1, A2) dudit dispositif de commutation ;
- un dispositif de commande (12) qui est conçu pour commuter la polarité avec laquelle la tension (U_{ZW}) s'appliquant à l'entrée (E1, E2) du dispositif de commutation (K) est couplée à la sortie (A1, A2) du dispositif de commutation (K) ; et
- un dispositif de synchronisation (14) qui est conçu pour fournir, au niveau de sa sortie (A1, A2), un signal de synchronisation (Sy) ;
**caractérisé en ce qu'**il comprend en outre :
- un dispositif de temporisation (16) qui est conçu pour produire, au niveau de sa sortie (A1, A2), un signal de déclenchement de commutation (KA) qui est synchronisé avec une fréquence de fonctionnement prédéfinissable de la lampe à décharge à haute pression (EL) ;
- un dispositif à modèles (18) dans lequel est déposée une sélection de moments de commutation possibles, où la sélection des moments de commutation possibles est synchronisée, dans le temps, sur le signal de synchronisation (Sy), où le dispositif à modèles (18) présente une entrée (E1, E2) qui est couplée à la sortie (A1, A2) du dispositif de temporisation (16), pour la transmission du signal de déclenchement de commutation (KA), où le dispositif à modèles (18) est conçu pour coupler au dispositif de commande (12), à la réception d'un signal de déclenchement de commutation (KA) se produisant lors du moment de commutation - qui suit dans le temps - de la sélection des moments de commutation, un signal de commande de commutation (KS) servant au déclenchement d'une commutation.

2. Agencement de circuits (10) selon la revendication 1, **caractérisé en ce que** le dispositif de synchronisation (14) présente une entrée (E1, E2) à laquelle peut être couplé un signal vidéo (V) divisé en blocs, où le dispositif de synchronisation (14) est conçu pour fournir le signal de synchronisation (Sy) synchronisé sur les blocs du signal vidéo.

3. Agencement de circuits (10) selon l'une des revendications 1 ou 2, **caractérisé en ce qu'**il comprend en outre un dispositif de mesure de composante continue (22) qui est conçu pour déterminer et fournir la valeur réelle de la composante continue du signal fourni au niveau de la sortie (A1, A2) du dispositif de commutation (K).

4. Agencement de circuits (10) selon la revendication 3, **caractérisé en ce qu'**il comprend un dispositif de prédétermination de valeurs théoriques (24) par lequel peut être fixée une valeur théorique de la composante continue du signal fourni au niveau de la sortie (A1, A2) du dispositif de commutation (K), et
un dispositif de réglage (20) qui, d'une part, est couplé au dispositif à modèles (18) et qui, d'autre part, est couplé au dispositif de mesure de composante continue (22) et au dispositif de prédétermination de valeurs théoriques (24), pour la fourniture de la valeur réelle et de la valeur théorique de la composante continue du signal fourni au niveau de la sortie (A1, A2) du dispositif de commutation (K), et qui est conçu pour modifier l'émission du signal de commande de commutation (KS), en particulier par retard ou par élimination, de manière telle que l'importance de la différence entre la valeur réelle et la valeur théorique de la composante continue du signal fourni au niveau de la sortie (A1, A2) du dispositif de commutation (K) se situe au-dessous d'une valeur de seuil prédéfinissable.

5. Agencement de circuits (10) selon la revendication 4, **caractérisé en ce que** la valeur théorique fournie par le dispositif de prédétermination de valeurs théoriques (24) est égale à zéro.

6. Agencement de circuits (10) selon la revendication 4, **caractérisé en ce que** la valeur théorique fournie par le dispositif de prédétermination de valeurs théoriques (24) est différente de zéro.

7. Agencement de circuits (10) selon l'une quelconque des revendications 4 à 6, **caractérisé en ce que** le dispositif de prédétermination de valeurs théoriques (24) est conçu pour modifier dynamiquement la valeur théorique, où le dispositif de prédétermination de valeurs théoriques (24) est couplé en particulier à un dispositif de mesure de température (26) et/ou à un dispositif de mesure de pointes d'électrodes (28).

8. Agencement de circuits (10) selon l'une quelconque des revendications précédentes, **caractérisé en ce que** la fréquence de fonctionnement prédéfinissable est une fréquence de fonctionnement spécifique de la lampe.

9. Agencement de circuits (10) selon l'une quelconque des revendications 1 à 7, **caractérisé en ce que** la fréquence de fonctionnement prédéfinissable est choisie en fonction d'au moins un paramètre de la lampe.

10. Dispositif de projection comprenant un agencement de circuits (10) selon l'une quelconque des revendications précédentes.

11. Dispositif de projection selon la revendication 10, **caractérisé en ce qu'**il comprend une roue chromatique et un dispositif de pilotage (30) pour la roue chromatique, où le dispositif de pilotage (30) pour la roue chromatique est conçu pour faire tourner la roue chromatique de manière telle que la rotation soit synchronisée avec le signal de synchronisation (Sy).

12. Procédé de fonctionnement d'une lampe à décharge à haute pression (EL) sur un agencement de circuits (10) comprenant un dispositif de commutation (K) qui présente une entrée (E1, E2) servant au couplage à une source de tension continue et une sortie (A1, A2) servant au couplage à une lampe à décharge à haute pression (EL), où le dispositif de commutation (K) est conçu pour coupler, à sa sortie (A1, A2), la tension (U_{ZW}) s'appliquant au niveau de l'entrée (E1, E2) ; un dispositif de commande (12) qui est conçu pour commuter la polarité avec laquelle la tension (U_{ZW}) s'appliquant au niveau de l'entrée (E1, E2) du dispositif de commutation (K) est couplée à la sortie (A1, A2) du dispositif de commutation (K) ; un dispositif de synchronisation (14) qui est conçu pour fournir, au niveau de sa sortie (A1, A2), un signal de synchronisation (Sy) ; un dispositif de temporisation (16) qui est conçu pour produire, au niveau de sa sortie (A1, A2), un signal de déclenchement de commutation (KA) qui est synchronisé avec une fréquence de fonctionnement prédéfinissable de la lampe à décharge à haute pression (EL) ; un dispositif à modèles (18) dans lequel est déposée une sélection de moments de commutation possibles, où la sélection des moments de commutation possibles est synchronisée, dans le temps, sur le signal de synchronisation (Sy), **caractérisé par** les étapes suivantes :
a) émission d'un signal de déclenchement de commutation (KA) par le dispositif de temporisation (16) ;
b) réception du signal de déclenchement de commutation (KA) par le dispositif à modèles (18) ;
c) lors du moment de commutation - qui suit dans le temps - de la sélection de moments de commutation, couplage d'un signal de commande de commutation (KS), au dispositif de commande (12) ; et
d) pilotage du dispositif de commutation (K) par le dispositif de commande (12), pour le déclenchement d'une commutation.

13. Produit de programme informatique qui peut être chargé dans la mémoire interne d'un calculateur numérique et comprend des parties de codes logiciels avec lesquelles sont exécutées les étapes selon la revendication 12, quand le produit fonctionne sur un ordinateur.
